# EUROPEAN PATENT APPLICATION

(11) **EP 0 926 402 A1**
(43) Date of publication of application: **30.06.1999**
(21) Application number: 97204080.2
(22) Date of filing: 22.12.1997
(51) Int. Cl.: F16H 61/02, F16H 61/00

(54) **Power train**

(71) Applicant: Van Doorne's Transmissie B.V., NL-5026 RA Tilburg (NL)
(72) Inventor: Mussaeus, Marc André, 5643 BX Eindhoven (NL)

(57) **Abstract**

The invention provides for a power train, in particular for motor vehicles, comprising an engine (1) with an engine shaft (5a), an automatic transmission unit (3) with an input shaft (5b) which is drivingly connected to the engine shaft (5a) via a torque converter (2a) with a lock-up clutch (2c), and a control system (6) for controlling the transmission ratio of the automatic transmission unit (3). The control system (6) controls the transmission ratio in dependence of the engagement state of the lock-up clutch (2c) of the torque converter (2).

## Description

The invention relates to a power train, in particular for motor vehicles, comprising an engine with an engine shaft, an automatic transmission unit with an input shaft and an output shaft which is drivingly connected to the engine shaft via a torque converter with a lock-up clutch, and a control system for controlling the transmission ratio of the automatic transmission unit.

The engine shaft is drivingly connected to the pump-shell of the torque convertor. The turbine-shell of the torque convertor is drivingly connected to the input shaft of the transmission unit. The torque convertor amplifies the torque generated by the engine with a factor which depends on the speed ratio between the rotational speed of the turbine-shell and of the rotational speed of the pump-shell. When torque amplification is not desired the lock-up clutch is usually engaged to minimise the energy losses occurring in the torque convertor. The turbine-shell of the torque convertor is drivingly connected to the input shaft of the automatic transmission unit. The automatic transmission unit provides a variable speed or transmission ratio between its input and its output shaft and can be of a stepped ratio type, in which case only a limited number of speed or transmission ratios between the input and output shaft of the transmission can be set, or of a continuously variable ratio type, In which case the transmission ratio can be varied continuously between an upper and a lower limit. The control system for controlling the transmission ratio determines a desired transmission ratio and subsequently controls the actual transmission ratio so as to coincide with the desired transmission ratio. The automatic transmission unit is drivingly connected to a load, such as a drive shaft of a motor vehicle. Such a power train is commonly known for a considerable time.

The rotational speed of the engine shaft is referred to as the engine speed and the rotational speed of the input and of the output shaft of the transmission unit are referred to as the input speed and output speed of the transmission respectively. If there are no gearings present between the respective components, the rotational speed of the pump shell is equal to the engine speed and the rotational speed of the turbine-shell is equal to the input speed of the transmission unit.

According to a generally known control method, which is for example known from WO94/24465, the control system for controlling the transmission ratio of the automatic transmission unit controls said ratio in such a manner, that a desired power or a desired torque is generated by the engine on the engine shaft at the engine speed, providing the lowest energy consumption and thus the highest engine efficiency. To this end, the torque generated by the engine is measured as a function of engine speed and engine energy consumption. The power generated by the engine on the engine shaft is the product of the engine torque and the engine speed. Usually the necessary measurements am performed for each engine type by the engine manufacturer and results of such measurements are summarised graphically in a so-called engine map.

A look-up table or control curve, which links the engine speed for achieving optimum engine efficiency to a desired engine power or desired engine torque, is composed from measurement data and incorporated into the control system for controlling the transmission ratio. Based on a desired engine power or a desired engine torque, the determination of which is often linked to the position of an accelerator pedal or the throttle opening, a desired engine speed is extracted from the look-up table or control curve. Subsequently, the control system for controlling the transmission ratio controls said ratio in such a manner, that the actual engine speed approaches the desired value. Depending on whether the automatic transmission unit is of the stepped ratio type or of the continuously variable type, the actual engine speed can approximate the desired engine speed wit a smaller or larger degree of accuracy respectively. The known control method is often referred to as the Economy or E-mode.

The strategy followed in the known control method can also be used to optimise other engine parameters or even combinations of parameters, thereby creating other control methods. From an environmental point of view, it is useful to optimise both engine efficiency and exhaust gas emissions (e.g. [NOₓ]) at the same time. Another suitable combination of parameters is the engine efficiency in combination with engine performance. Usually several selectable control methods are incorporated into the control system for controlling the transmission ratio.

According to the known control method the engine speed is controlled by the setting of the transmission ratio of the automatic transmission unit, whilst optimising one or more engine parameters. However, it is found that a power train controlled according to the known method does not yield optimum results. Considering the known E-mode control method, the transmission ratio set by the control system is on average not optimal. However, it appears that conditions exist in which the transmission ratio set following the known control method is optimal, whereas other conditions also appear to exist in which the efficiency of the power train is far from optimal. So, it appears that the known control methods are not capable to at all times control an engine parameter or a combination of engine parameters to their respective optimum. It is the object of the present invention to overcome this problem.

According to a first embodiment of the invention this may be realised in that, the control system for controlling the transmission ratio of the automatic transmission unit controls said ratio in dependence of the engagement state of the lock-up clutch of the torque converter. When the lock-up clutch is at least partly disengaged, the characteristics of the power train can be improved by accepting a performance loss of an engine parameter for an even larger performance increase of a torque converter parameter. According to a further development of the embodiment a control method is adopted by the control system which comprises at least two sub-methods. One of said sub-methods is adopted when the lock-up clutch of the torque convertor is engaged. A further sub-method is adopted when said lock-up clutch is at least partly disengaged.

The first embodiment of the invention is particularly suited to the E-mode control method, since the efficiency of the torque convertor appears to be of significant influence to the efficiency of the power train. One sub-method corresponds to the known E-mode control method described in the above. This sub-method is adopted when the lock-up clutch of the torque converter is engaged, since in this case the torque converter is approximately 100% efficient. When the lock-up clutch is at least partly disengaged, the control system for controlling the transmission ratio controls said ratio according to a further sub-method in such a manner, that a desired power or a desired torque is generated by the engine on the transmission input shaft at the engine speed providing the lowest energy consumption. To this end the engine map is obtained and the torque amplification factor and torque capacity of the torque converter are measured as a function of the rotational speed of the pump-shell and of the turbine-shell. Sufficient accuracy is often obtained, by measuring as a function of the rotational speed of the pump-shell for a single value of the rotational speed of the turbine-shell and presenting the torque amplification factor and torque capacity as a function of the speed ratio of the torque converter. The torque convertor efficiency is calculated by multiplying the torque converting factor with the torque converter speed ratio. Usually the necessary measurements are performed for each torque converter type by the manufacturer and results of such measurements am summarised graphically in a so called torque converter map.

A look-up table or control curve, which links the engine speed for achieving optimum combined engine and torque converter efficiency to a desired engine power or a desired engine torque, is composed from measurement data and incorporated into the control system for controlling the transmission ratio. Based on a desired power or a desired engine torque, a desired engine speed is extracted from the look-up table or control curve. Subsequently, the control system for controlling the transmission ratio controls said ratio in such a manner, that the actual engine speed approaches the desired value.

It may, in some cases, be convenient to adopt another, however, equivalent approach. In the latter approach, a look-up table or control curve, which links the transmission input speed for achieving optimum combined engine and torque convertor efficiency to a desired engine power or a desired engine torque, is composed from measurement data and incorporated into the control system for controlling the transmission ratio. Based on a desired engine power or desired engine torque, a desired transmission input speed is extracted from the look-up table or control curve. Subsequently, the control system for controlling the transmission ratio controls said ratio in such a manner, that the actual transmission input speed approximates the desired transmission input speed. Following this approach, it is not necessary to be able to detect the actual engine speed.

According to a further development of the first embodiment, means are provided for detecting the engagement state of the lock-up clutch and for providing said control system with a signal indicative of the engagement state of the lock-up clutch.

According to second embodiment of the invention the control system for controlling the transmission ratio of the automatic transmission unit controls said ratio in such a manner, that a desired power or a desired torque is generated by the power train at the engine speed providing the lowest engine fuel consumption and thus the highest power train efficiency. To this end the engine map and the torque converter map are obtained and the efficiency of the automatic transmission unit is measured as a function of the transmission input or output speed for several or all of the transmission ratios of the automatic transmission unit. The efficiency of other generally adapted power train components, such as a fixed ratio gearing or a clutch, may be measured as well. However, in practice the influence on the optimal transmission ratio of the other generally adapted components is quite small. Usually the necessary measurements are performed for each power train component type by the manufacturer and results of such measurements are summarised graphically in so-called efficiency maps. It is also possible to measure the power train efficiency as a whole on a test rig.

A look-up table or control curve, which links the engine speed for achieving optimum power train efficiency to a desired engine power or a desired engine torque, is composed from the measurement data and incorporated in the control system for controlling the transmission ratio. Based on a desired engine power or a desired engine torque, a desired engine speed is extracted from the look-up table or control curve. Subsequently, the control system for controlling the transmission ratio controls said ratio in such in manner, that the actual engine speed approaches the desired engine speed.

Although the engine itself will perform less efficient when employing a power train according to the invention, the overall power train efficiency improves with respect to the state of the art power train. A power train according to the invention is more fuel efficient and/or produces less harmful exhaust gas emissions and/or posses improved driving characteristics with respect to the known power train.

The invention will now be explained in greater detail with the aid of a non-restrictive embodiment of the invention and with reference to the figures.
Figure 1 shows a schematic representation of a state of the art power train with an automatic transmission unit of the continuously variable type.
Figure 2a shows an example of an engine map with a control curve.
Figure 2b shows an example of a torque converter map.
Figure 3 shows the engine map of figure 2a with two control curves.
Figure 4 shows the engine map of figure 2a with two control curves.

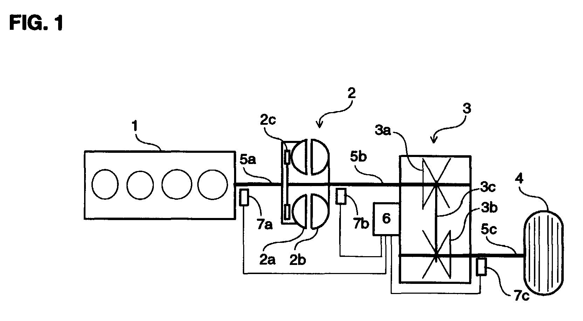

The powertrain shown in figure 1 comprises an engine 1 with an engine shaft 5c, which is drivingly connect to a torque convertor 2. The torque converter is provided with a pump-shell 2a, a turbine-shell 2b and a lock-up clutch 2c for mechanically linking said shells. The turbine shell 2b of the torque converter 2 is drivingly connected to the input shaft 5b of an automatic transmission unit 3. The automatic transmission unit 3 is a belt-and-pulley type continuously variable transmission, which is provided with a drive pulley 3a on the input shaft 5b and with a driven pulley on the output shaft 5b. The pullies 3a and 3b are interconnected by a drive belt 3c, so that torque can be transferred between said shafts 5b and 5c. The speed or transmission ratio i of the automatic transmission unit 3 is determined by the running radii of the drive belt in the drive pulley 3a and in the driven pulley 3b. A control system 6 controls said running radii of the drive belt 3c and thereby the transmission ratio i. Sensors 7b and 7c provide a signal representative of the rotational speed of the transmission input shaft ωᵢ and of the output shaft ωₒ respectively. These signals enable the control system 6 to determine the actual transmission ratio i. Sensor 7a provides a signal representative of the engine speed ωₑ.

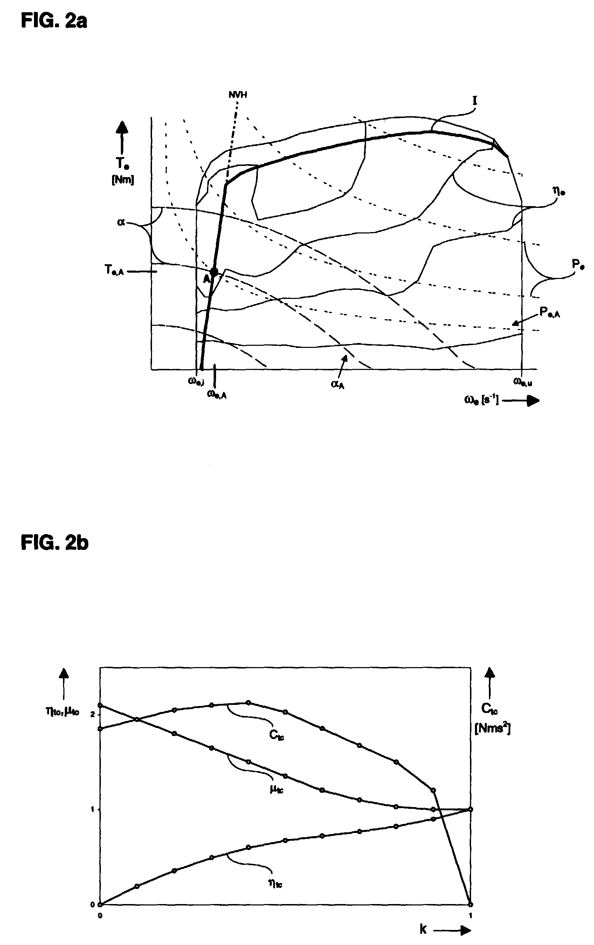

In figure 2a an example of an engine map with a control curve is shown. Values on the x-axis represent the engine speed ωₑ. The idle engine speed is denoted wit ω_{e,i} and on the upper engine speed is denoted with ω_{e,u}. Because of noise, vibration and harshness of the engine the NVH-curve is the practical lower limit for the engine speed ωₑ. Values on the y-axis represent the torque Tₑ generated by the engine (1) on the engine shaft (5a). The thin solid curves link points of constant engine efficiency ηₑ, the dotted curves link points of constant engine power Pₑ and the dashed curves link points of constant throttle opening α. Curve I represents the E-mode control curve, which links the engine speed ωₑ for achieving optimum engine efficiency ηₑ to engine torque Tₑ, engine power Pₑ, and throttle opening α.

When an operator of the power train sets a throttle opening of α_{A}, the control system (6) determines the desired engine speed ω_{e,A} according to curve I. The desired engine speed ω_{e,A} corresponds to the x-coordinate of the intersection point A of the dashed α_{A} curve and curve I. The torque T_{e,A} generated by the engine (1) on the engine shaft (5a) at a throttle opening α_{A} corresponds to the y-coordinate of the intersection point A. The control system (6) compares the desired engine speed ω_{e,A} with the actual engine speed ωₑ and adjusts the transmission ratio i of the automatic transmission unit (3) so as to minimise the difference between said engine speeds. Many strategies for adjusting the transmission ratio i are generally known and they can involve damping and/or modulation.

In case of the stepped ratio automatic transmission unit (3), the control system (6) selects the transmission ratio that yields the best approximation of the intersection point A, either in terms of engine speed ωₑ or in terms of engine efficiency ηₑ.

Figure 2b shows an example of a torque converter map. The curve labelled η_{tc} provides the torque converter efficiency η_{tc} as a function of the speed ratio k between the rotational speed ωᵢ of the turbine-shell (2b) and of the rotational speed ωₑ of the pump-shell (2a). The curve labelled C_{tc} provides the torque capacity C_{tc} of the torque converter (2) as a function of the speed ratio k. Finally, the curve labelled µ_{tc} provides the torque amplification factor µ_{tc} of the torque converter (2) as a function of the speed ratio k.

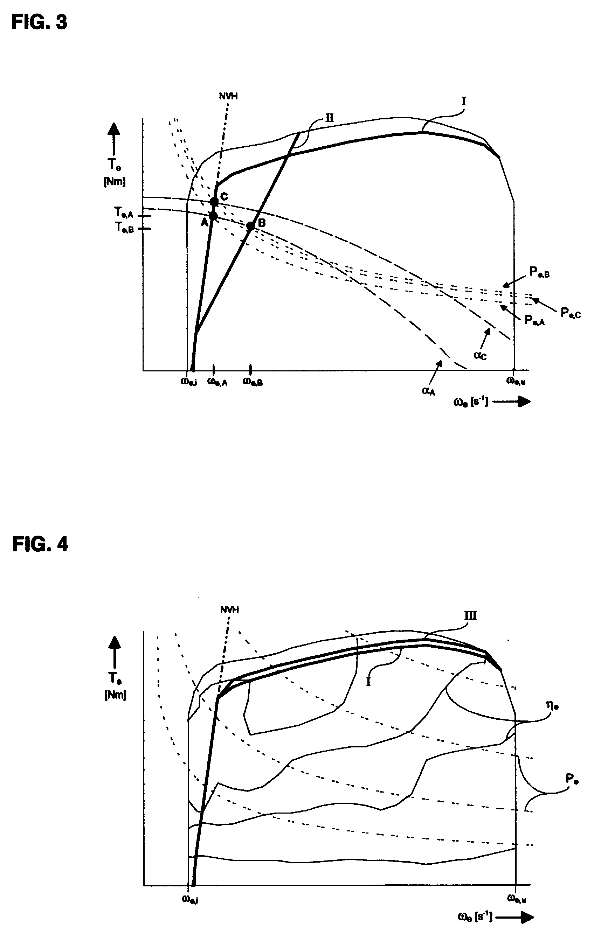

Figure 3 shows the engine map of figure 2a with two control curves, which represent the two sub-methods according to the first embodiment of the invention. One of the sub-method is represented by curve I and corresponds to the known E-mode control method. This sub-method is adopted when the lock-up clutch (2c) of the torque converter (2) is engaged. The other sub-method is represented by curve II and is adopted when the lock-up clutch (2a) of the torque converter (2) is at least partly disengaged. Curve II represents the engine speed ωₑ for achieving optimum combined engine and torque converter efficiency η_{tc}*ηₑ as a function of engine torque Tₑ. Via the torque converter capacity factor C_{tc} the data in the engine map is implicitly linked to the data in the torque converter map and curve II can be determined by iteration whilst maximising the combined engine and torque converter efficiency ηₑ*η_{tc} . Over almost the entire range of the engine torque Tₑ the engine speed ωₑ according to curve II is higher than according to curve I, which is somewhat surprising since the efficiency of the torque converter η_{tc} decreases as the engine speed ωₑ increases and thus the speed ratio k decreases. In fact the transmission input speed ωᵢ increases more than the engine speed ωₑ decreases so that the speed ratio k actually increases. Although an engine (1) operated according to curve II generates power less efficiently than the same engine (1) operated according to curve I, the combination of engine (1) and torque converter (2) generates power more efficiently.

In combination with a continuously variable transmission unit (3) the lock-up clutch (2a) of the torque converter (2) is usually only disengaged when the transmission output speed ωₒ is relatively low, thereby improving the initial acceleration of the load (4) and dampening torque fluctuations in the power train. In combination with a stepped ratio transmission unit the lock-up clutch (2a) of the torque converter (2) is also disengaged when the transmission ratio i is changed by the control system (6). The actual engagement of a lock-up clutch (2c) can be made dependent on various parameters such as engine speed, acceleration of the load or throttle opening.

When an operator of the power train sets a throttle opening of α_{A}, the control system (6) determines the desired engine speed ω_{e,A}. If the lock-up clutch (2c) is at least partly disengaged, curve II is adopted by the control system (6) and the desired engine speed ω_{e,B} corresponds to the x-coordinate of the intersection point B of the dashed α_{A} curve and curve II. When the lock-up clutch (2c) engages, curve I is adopted by the control system (6) and the desired engine speed ω_{e,A} is given by the x-coordinate of the intersection point A. The power generated by an engine operating in intersection point B is P_{e,B}, whereas the power generated by the engine in intersection point A is P_{e,A}. The power generated by the combination of engine (1) and torque converter (2) on the transmission input shaft (5b) is calculated by multiplying the engine power Pₑ with the torque converter efficiency η_{tc}.

If the power train is provided with an accelerator pedal and an operator of the power train keeps the position of said accelerator pedal constant, the power generated by the combination of engine (1) and torque converter (2) is preferably also constant. As is illustrated in figure 3, said power can be kept constant, if during the changing of the adopted control curve, the throttle opening α_{A} is changed to α_{C} in such a manner that P_{e,C} is equal to η_{tc,B}*P_{e,B}. To this end the throttle valve may be electronically controlled In dependence of the position of the accelerator pedal according to two control curves or look-up tables, of which one is adopted when said lockup clutch (2c) is engaged and another control curve or look-up table is adopted when said lock-up clutch (2c) is at least partly disengaged.

Figure 4 shows the engine map of figure 2a including curve I. Curve III represents a control curve according to the second embodiment of the invention. In order to be able to determine curve III, the efficiency ηₚₜ of the entire power train is measured and calculated as a function of engine speed ωₑ and engine torque Tₑ. Curve III represents the engine speed ωₑ for achieving the highest power train efficiency ηₚₜ as a function of engine torque Tₑ in case the lock-up clutch (2c) of the torque converter (2) is engaged.

## Claims

1. Power train, in particular for motor vehicles, comprising an engine (1) with an engine shaft (5a), an automatic transmission unit (3) with an input shaft (5b) which is drivingly connected to the engine shaft (5a) via a torque converter (2a) with a lock-up clutch (2c), and a control system (6) for controlling the transmission ratio of the automatic transmission unit (3), characterised in that, the control system (6) is capable of controlling the transmission ratio in dependence of the engagement state of the lock-up clutch (2c) of the torque converter (2).

2. Power train according to claim 1, characterised in that, detection means are provided for detecting the engagement state of said lock-up clutch (2c) and for providing said control system (6) with a signal indicative of said engagement state.

3. Power train according to claim 1 or 2, characterised in that, said control system (6) controls the transmission ratio such that, when said lock-up clutch (2c) is engaged the transmission input speed corresponds to or is lower than the transmission input speed when said lock-up clutch (2c) is at least partly disengaged.

4. Power train according to claim 1, 2 or 3, characterised in that, said control system (6) controls the transmission ratio of the automatic transmission unit (3) in such a manner, that a desired torque is generated by the engine (1) on the transmission input shaft (5b) at an engine speed providing the lowest energy consumption.

5. Power train according to any of the preceding claims, said control system (6) adopting at least one control method, characterised in that, the adopted control method comprises at least two sub-methods, of which one is adopted when said lock-up clutch (2c) is engaged and another sub-method is adopted when said lock-up clutch (2c) is at least partly disengaged.

6. Power train according to any of the preceding claims provided with a throttle valve, an accelerator pedal and control means for electronically controlling the throttle valve opening in dependence of the position of the accelerator pedal, characterised in that, said control means comprise at least two control curves or look-up tables, of which one is adopted when said lockup clutch (2c) is engaged and another control curve or look-up table is adopted when said lock-up clutch (2c) is at least partly disengaged.

7. Power train according to claim 6, the automatic transmission unit (3) being provided with an output shaft (5c), characterised in that, when the engagement state of the lock-up clutch changes, said control means control the throttle valve opening in such a manner that the power generated by the engine on said output shaft (5c) is essentially constant.

8. Power train according to any of the preceding claims, characterised in that, the transmission ratio of the automatic transmission unit (3) is continuously variable between an upper and a lower limit.

9. Power train, in particular according to any of the preceding claims, comprising an engine (1) with an engine shaft (5a), an automatic transmission unit (3) with an input shaft (5b) and an output shaft (5c), the input shaft (5b) being rotationally coupled to the engine shaft (5a) via a torque converter (2a), and a control system (6) for controlling the transmission ratio of the automatic transmission unit (3), characterised in that, said control system (6) controls the transmission ratio of the automatic transmission unit (3) in such a manner, that a desired torque is generated by the engine (1) on said output shaft (5c) at an engine speed providing the lowest energy consumption.
